# EUROPÄISCHE PATENTSCHRIFT

(11) **EP 3 528 065 B1**
(45) Veröffentlichungstag und Bekanntmachung des Hinweises auf die Patenterteilung: **18.08.2021**
(21) Anmeldenummer: 18156871.8
(22) Anmeldetag: 15.02.2018
(51) Int. Cl.: G05B 19/042, G06F 1/30

(54) **VERFAHREN ZUM ÜBERWACHEN, STEUERN UND KONTROLLIERTEN HERUNTERFAHREN VON STEUER- UND/ODER COMPUTEREINHEITEN**
METHOD FOR MONITORING, MANAGING AND CONTROLLED SHUTDOWN OF CONTROL AND/OR COMPUTATIONAL UNITS
PROCÉDÉ DE SURVEILLANCE, DE COMMANDE ET DE MISE HORS TENSION CONTRÔLÉE DES UNITÉS DE COMMANDE ET/OU DES UNITÉS INFORMATIQUES

(43) Veröffentlichungstag der Anmeldung: 21.08.2019
(73) Patentinhaber: Siemens Aktiengesellschaft, 80333 München (DE)
(72) Erfinder: Allahut, Gerd, 91171 Greding (DE); Wieland, Erwin, 1130 Wien (AT); Schedlberger, Robert, 4283 Bad Zell (AT)
(74) Vertreter: Maier, Daniel Oliver

(56) Entgegenhaltungen:
- EP-A1- 1 832 955
- EP-A1- 2 869 154
- EP-B1- 2 787 405

## Beschreibung

### Technisches Gebiet

Die gegenständliche Erfindung betrifft ein Verfahren zum Überwachen, Steuern und kontrollierten Herunterfahren von Steuer- und/oder Computereinheiten zumindest einer Anlage. Die zumindest eine Anlage weist Stromversorgungskomponenten, insbesondere elektrische Stromversorgungen, elektrische Sicherungen, unterbrechungsfreie Stromversorgungen, etc., auf, von welchen eine Energieversorgung der Steuer- und/oder Computereinheiten sichergestellt wird.

### Stand der Technik

Als Automatisierungsanlage bzw. kurz Anlage wird allgemein eine ganz oder teilweise automatisierte, industrielle Anlage zur Fertigung von Produkten oder zur Steuerung von Prozessen bezeichnet. Für die Fertigung von Produkten bzw. zur Steuerung von Prozessen umfassen industrielle Anlagen üblicherweise Steuer- und/oder Computereinheiten wie z.B. so genannte Industrie-PCs und/oder intelligente elektronische, meist mikroprozessorbasierte Geräte (z.B. Steuergeräte, Schutzgeräte, Druck- und Temperaturmessumformer, Durchflussmesser, Stellantriebe, speicherprogrammierbare Steuerungen, etc.), von welchen anlageninterne bzw. anlagenspezifische Prozesse gesteuert, überwacht und/oder kontrolliert werden.

Für die Energieversorgung der Steuer- und/oder Computereinheiten werden in einer Anlage Stromversorgungskomponenten eingesetzt. Unter Stromversorgungskomponenten werden dabei alle Komponenten in einem Strompfad wie z.B. elektrische Stromversorgungen und/oder Schaltnetzteile, elektrische Sicherungen, unterbrechungsfreie Stromversorgungen, Stromspeicher (z.B. Akkumulator, Kondensator, supraleitende magnetischer Energiespeicher, etc.), Messeinheiten, etc. verstanden, welche die Versorgung der jeweiligen Steuer- und/oder Computereinheit mit Energie über diesen Strompfad überwachen, steuern und sicherstellen und damit für möglichst störungsfreie Abläufe in der Anlage sorgen.

Für einen möglichst störungsfreien Ablauf in einer Automatisierungsanlage ist es auch notwendig, unerwartete Ausfälle in der Stromversorgung der Steuer- und/oder Computereinheiten aufzufangen und Schäden wie Datenverluste durch Störungen im Strompfad bzw. in der Energieversorgung zu vermeiden. Derartige Störungen können beispielsweise durch einen unerwarteten Ausfall bzw. Störung des Stromversorgungsnetzes oder durch eine Störung bei einer Stromversorgungskomponente im Strompfad (z.B. Ausfall, Abschaltung durch Überhitzung, etc.) der jeweiligen Steuer- und/oder Computereinheit auftreten.

Um einen Betrieb der elektrischen Anlage unabhängig von Störungen und/oder Ausfällen im Stromversorgungsnetz und/oder im Strompfad sicherzustellen, werden beispielsweise bei kritischen Lasten wie z.B. Steuer- und/oder Computereinheiten mit Informationsverarbeitungsfunktion so genannte unterbrechungsfreie Stromversorgungen (kurz: USV) oder Uninterruptable Power Supplies (kurz: UPS) als Stromversorgungskomponenten eingesetzt. Die unterbrechungsfreie Stromversorgung dient dazu, bei einer Störung oder einem Ausfall der Energieversorgung eine hilfsweise Energieversorgung für die jeweils angeschlossene Steuer- und/oder Computereinheit mit Hilfe von einem oder mehreren Energiespeichermodulen (z.B. Akkumulatormodulen, Batterien) bereitzustellen. Die Energieversorgung einer Steuer- und/oder Computereinheit durch die Energiespeicher einer USV weist den Nachteil auf, dass der oder die Energiespeicher nur für eine bestimmte Dauer für die Energieversorgung sorgen können. Insbesondere bei längeren Störungen oder Ausfällen der Stromversorgung können beispielsweise durch zur Neige gehende Energiereserven der USV wieder Probleme (z.B. Datenverluste, unkontrolliertes Herunterfahren, etc.) bei den Steuer- und/oder Computereinheiten auftreten.
Zum Verhindern derartiger Probleme wäre ein kontrolliertes Herunterfahren von Steuer- und/oder Computereinheiten bei Ausfällen und Störungen in der Stromversorgung - ähnlich wie bei mobilen Endgeräten (z.B. Laptop, Mobiltelefon, Smartphone) im Akku-Betrieb - wünschenswert. Von mobilen Endgeräten im Akku-Betrieb werden beispielsweise bei geringer werdender Akku-Reserve bestimmte Aktionen durchgeführt. Diese Aktionen reichen beispielsweise von einer Reduktion des Energieverbrauchs (z.B. Reduktion der Displayhelligkeit, Beenden von Anwendungen) über Senden von Warnungen, dass die Akku-Reserve vorgegebene Schwellwerte unterschritten hat, bis zum kontrollierten Ausschalten des mobilen Endgeräts bei Unterschreiten einer Mindest-Akku-Reserve, wobei üblicherweise noch laufende Anwendungen ordnungsgemäß beendet sowie Daten gesichert werden, bevor das Gerät abgeschaltet wird.

Aus der Schrift EP 1 832 955 A1 ist beispielsweise ein unterbrechungsfreies Stromversorgungssystem bekannt, bei welchem eine Servereinheit von zwei unterbrechungsfreien Stromversorgungen eine Servereinheit mit Energie versorgt wird. Dabei sind die beiden Stromversorgungen mit der Servereinheit über ein Kommunikationsnetz verbunden und kommunizieren der Servereinheit, wenn eine Störung im Versorgungsnetz festgestellt bzw. wenn eine oder beide Stromversorgungen auf Batteriebetrieb geschaltet wird. In der Servereinheit ist dazu eine Wartezeit gespeichert, nach deren Ablauf ein Herunterfahren der Servereinheit gestartet wird. Mittels eines derartigen Stromversorgungssystems kann zwar eine direkt an die Stromversorgungen angebundene Servereinheit bei einer Störung im Stromversorgungsnetz geordnet heruntergefahren werden, aber um Datenverluste bei mehreren Steuer- und/oder Computereinheiten durch Störungen bei der Energieversorgung zu verhindern, ist die in der Schrift EP 1 832 955 A1 dargestellte Lösung allerdings weniger geeignet und zu aufwendig. Es muss z.B. für jede Steuer- und/oder Computereinheit einer Anlage ein derartiges Stromversorgungssystem vorgesehen werden. Weiterhin können z.B. zeitlich notwendige Abfolgen beim Herunterfahren von mehreren Steuer- und/oder Computereinheiten nicht berücksichtigt werden und die Stromversorgungen werden durch zusätzliche Überwachungs- und Kommunikationsaufgaben wie z.B. das Generieren von Nachrichten im Störungsfall belastet.

In der Patentschrift EP 2 787 405 B1 wie in der Patentschrift EP 2 876 778 B1 sind beispielsweise Verfahren zum Betrieb einer elektrischen Anlage mit einer Mehrzahl an elektrischen Verbrauchern beschrieben, welche bei Ausfall einer Versorgungsspannung an eine Pufferspannung einer unterbrechungsfreien Stromversorgung angeschlossen werden, um die Versorgung der Verbraucher für eine Zeitdauer bzw. Pufferphase sicherzustellen. Während der Pufferphase sollen die elektrischen Verbraucher geregelt abgeschaltet werden bzw. sich frühzeitig auf eine bevorstehende Abschaltung vorbereiten können. Dazu werden die Verbraucher mit einem Softwarebaustein versehen. Dabei wird ein Verbraucher bzw. der zugehörige Softwarebaustein als Master eingestellt. Die Softwarebausteine der anderen Verbraucher werden als Slaves im Sinne einer Master-Slave-Kommunikation festgelegt und der Master in der Stromversorgung als Kommunikationspartner für die Durchführung des geregelten Abschaltvorgangs registriert. Im Falle des Fehlers der Versorgungsspannung bzw. bei Umschalten auf die Pufferspannung wird dies dem Master von der Stromversorgung mitgeteilt und damit der geregelte Abschaltvorgang bzw. einen Abschaltsequenz gestartet. Dabei ist allerdings zu beachten, dass die Slaves vor dem Master abgeschaltet werden müssen - d.h. eine Wartezeit (d.h. die Zeit bis zum Start des geregelten Abschaltens) muss z.B. bei den Slaves kürzer sein als beim Master. Weiterhin weist ein derartiges Verfahren eine relativ aufwendige Kommunikation bzw. zeitaufwendige Administration auf, da es für jede unterbrechungsfreie Stromversorgung einer Anlage und die jeweils zugehörigen Verbraucher getrennt eingerichtet werden muss. Zusätzlich kann es beim Abschalten von mehreren Verbrauchern gemäß dem Verfahren aus der Schrift EP 2 787 405 B1 bzw. aus der Schrift EP 2 876 778 B1 vor allem aufgrund des Master-Slave-Prinzips bei der Kommunikation zu Fehlern bei der Konfiguration und in der Folge zu Fehlern beim Abschalten der Verbraucher kommen. Weiterhin wird die unterbrechungsfreie Stromversorgung durch die direkte Kommunikation mit dem als Master eingestellten Verbraucher zusätzlich belastet.

### Darstellung der Erfindung

Der Erfindung liegt daher die Aufgabe zugrunde, ein gegenüber dem Stand der Technik verbessertes Verfahren zum Überwachen, Steuern und kontrollierten Herunterfahren von Steuer- und/oder Computereinheiten zumindest einer Anlage anzugeben, durch welches ohne Detailkenntnisse von Kommunikationsdaten Steueranwendungen, welche auf Steuer- und/oder Computereinheiten zumindest einer Anlage installiert sind, erkannt werden und jenen Stromversorgungskomponenten dynamisch zugeordnet werden können, welche bei einer Störung die jeweilige Steuer- und/oder Computerkomponente der Anlage beeinflussen.

Diese Aufgabe wird durch ein Verfahren der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren zum Überwachen, Steuern und kontrollierten Herunterfahren von Steuer- und/oder Computereinheiten zumindest einer Anlage. Dabei werden die Steuer- und/oder Computereinheiten mittels Stromversorgungskomponenten wie z.B. elektrische Stromversorgungen und/oder Schaltnetzteile, elektrische Sicherungen, unterbrechungsfreie Stromversorgungen, Stromspeicher (z.B. Akkumulator, Kondensator, supraleitende magnetischer Energiespeicher, etc.), Messeinheiten, etc. mit Energie versorgt. Dazu wird auf den Steuer- und/oder Computereinheiten der zumindest einen Anlage jeweils eine Steueranwendung installiert. Über ein Kommunikationsnetz wird von den Stromversorgungskomponenten und den Steuer- und/oder Computereinheiten der zumindest einen Anlage eine Verbindung zu einem Steuerungssystem für Stromversorgungskomponenten aufgebaut. Dann werden mittels eines von dem Steuerungssystem über das Kommunikationsnetz ausgesandten Detektionsaufrufs neben den Stromversorgungskomponenten der zumindest einen Anlage auch die auf den Steuer- und/oder Computereinheiten der zumindest einen Anlage installierten Steueranwendungen identifiziert und den Stromversorgungskomponenten der zumindest einen Anlage jene identifizierten Steueranwendungen zugeordnet, welche durch eine Störung der jeweiligen Stromkomponente zumindest beeinflusst werden.

D.h. es werden in erster Linie einer Stromversorgungskomponente die Steueranwendungen jener Steuer- und/oder Computereinheiten zugeordnet, welche von dieser Stromversorgungskomponente mit Energie versorgt werden. Zusätzlich besteht die Möglichkeit, einer Zuordnung zwischen einer Stromversorgungskomponente und einer oder mehreren Steueranwendungen einzurichten, wenn eine Störung in der Energieversorgung bei dieser Stromversorgungskomponente die entsprechende bzw. entsprechenden Steuer- und Computereinheiten indirekt beeinflusst.

Die eingerichteten Zuordnungen zwischen den Stromversorgungskomponenten und identifizierten Steueranwendungen werden dann gespeichert und die Stromversorgungskomponenten auf Event-Alarme (z.B. Störung der Energieversorgung, Störung bei der zugeordneten Stromversorgungskomponente wie z.B. Überhitzung oder Ausfall, Umschalten auf Pufferbetrieb bei einer unterbrechungsfreien Stromversorgung, niedriger Batteriestatus bei unterbrechungsfreier Stromversorgung, etc.) überwacht. Bei Auftreten eines oder mehrerer Event-Alarme bei einer der Stromversorgungskomponenten der zumindest einen Anlage wird dann von der oder den jeweils zugeordneten Steueranwendungen auf den zugehörigen Steuer- und/oder Computereinheiten zumindest eine vorgebbare Aktion eingeleitet - wie z.B. Abwarten einer vorgebbaren Pufferzeit, Energiesparmaßnahmen einleiten, Herunterfahren vorbereiten (z.B. Beenden von Applikationen und/oder Daten speichern), Herunterfahren durchführen, etc.

Der Hauptaspekt der erfindungsgemäß vorgeschlagenen Lösung besteht darin, dass mittels eines Steuerungssystems für Stromversorgungskomponenten alle Steueranwendungen entdeckt und detektiert werden, welche auf den jeweiligen Steuer- und/oder Computereinheiten der zumindest einen Anlage installiert und verfügbar sind. Weiterhin erfolgt eine Zuordnung zu den Stromversorgungskomponenten zentral über das Steuerungssystem für Stromversorgungskomponenten, wodurch eine zeitsparende und flexible Konfiguration und Administration ermöglicht wird. Außerdem ist durch das erfindungsgemäße Verfahren keine Unterscheidung in zwei Arten von Steueranwendungen bzw. Steuer- und/oder Computereinheiten für das Herunterfahren (z.B. Master/Slave) notwendig. Durch das erfindungsgemäße Verfahren werden jeder Stromversorgungskomponente zumindest die Steueranwendungen der von dieser Stromversorgungskomponente direkt mit Energie versorgten Steuer- und/oder Computereinheiten zugeordnet.

Es wird auch eine Fehlerhäufigkeit, vor allem bei der Zuordnung, reduziert, da über das Steuerungssystem für Stromversorgungskomponenten sowohl Daten zu den in der Anlage verfügbaren bzw. verwendeten Stromversorgungskomponenten wie auch zu den verfügbaren Steueranwendungen verfügbar sind. Die Zuordnungen zwischen Stromversorgungskomponenten und Steueranwendungen kann damit auf einfache und flexible Weise z.B. anhand eines Anlagenplans durchgeführt werden. Zusätzlich können beispielsweise sehr leicht Wartezeiten und/oder notwendige Herunterfahrzeiten einzelner Steuer- und/oder Computereinheiten berücksichtigt werden. Bei der Zuordnung kann gegebenenfalls geprüft werden, ob beispielsweise Steuer- und/oder Computereinheiten in einer vorgegebenen Abfolge bzw. Reihenfolge heruntergefahren werden müssen. Weiterhin ermöglicht der Einsatz des Steuerungssystems für Stromversorgungskomponenten und eine zentrale Zuordnung eine Reduktion einer Kommunikationsbelastung der einzelnen Stromversorgungskomponenten sowie für die Steuer- und/oder Computereinheiten.

Es ist vorteilhaft, wenn für eine Zuordnung der identifizierten Steueranwendungen zu den Stromversorgungskomponenten der zumindest einen Anlage die Stromversorgungskomponenten und die vom Steuerungssystem für Stromversorgungskomponenten identifizierten Steueranwendungen auf zumindest einer Ein-/Ausgabeeinheit ausgegeben werden. Dabei kann die zumindest eine Ein-/Ausgabeeinheit an das Steuerungssystem für Stromversorgungskomponenten angebunden sein. Eine Anbindung der Ein-/Ausgabeeinheit an das Steuerungssystem kann beispielsweise mittels einer Applikation, insbesondere Webapplikation, erfolgen. Für eine Ausgabe bzw. Anzeige der identifizierten Stromversorgungskomponenten und Steueranwendungen sowie für die Durchführung der Zuordnung kann beispielsweise ein standardisierter Internet- bzw. Webbrowser als Benutzerschnittstelle verwendet werden. Dadurch können beispielsweise ohne zusätzlichen Aufwand bzw. ohne Einschränkungen ein stationärer PC, stationäre PC-Systeme und mobile Endgeräte (z.B. Tablet-PC, Handheld, etc.) für die Ein-/Ausgabeeinheit bzw. als Anzeige genutzt werden. Weiterhin ist eine Nutzung im Rahmen des so genannten Cloud Computings möglich, über welches beispielsweise die Ein-/Ausgabeeinheit bzw. die Ausgabe der Stromversorgungskomponenten und Steueranwendungen sowie eine Zuordnungsfunktionalität mittels Anwendungen zur Verfügung gestellt werden.

Es ist weiterhin günstig, wenn nach der Zuordnung zwischen Stromversorgungskomponenten und identifizierten Steueranwendungen Konfigurationsparameter und/oder vorgebbare Aktionen für die jeweilige Steueranwendung eingegeben bzw. eingestellt werden. Dies kann z.B. über die zumindest eine Ein-/Ausgabeeinheit erfolgen, welche an das Steuerungssystem für Stromversorgungskomponenten angebunden ist. Die Konfiguration der jeweiligen Steueranwendung kann dabei z.B. an die jeweils zugeordnete Stromversorgungskomponente angepasst werden. So können beispielsweise Konfigurationsparameter wie z.B. Puffer- oder Wartezeiten im Fall eines Event-Alarms wie z.B. "Stromversorgung schaltet auf Puffer- oder Batteriebetrieb" eingestellt werden. Während dieser Puffer- oder Wartezeiten können von der Steueranwendung z.B. keine Aktionen oder vorbereitende Aktionen für das Herunterfahren der Steuer- und/oder Computereinheit eingeleitet werden.

Weiterhin können bei Auftreten bestimmter Event-Alarme bei einer Stromversorgungskomponente für die jeweilige Steueranwendung einzuleitende Aktionen eingestellt werden. So kann z.B. bei Abschalten/Ausfall einer Stromversorgungskomponente wegen z.B. Überhitzung, Störungen im Stromversorgungsnetz, etc. ein sofortiges Herunterfahren der versorgten Steuer- und/oder Computereinheiten als Aktion eingestellt werden. Bei einer unterbrechungsfreien Stromversorgung als zugeordnete Stromversorgungskomponente kann beispielsweise beim Einstellen der vorgebbaren Aktionen für die jeweiligen Steueranwendungen der Pufferbetrieb (d.h. ein Umschalten auf einen Batteriebetrieb) berücksichtigt werden. D.h. die jeweilige Steuer- und/oder Computereinheit kann von der zugehörigen Steueranwendung angewiesen werden, beispielsweise bei einem Event-Alarm "Umstellung auf Pufferbetrieb" der Stromversorgung Energiesparmaßnahmen einzuleiten (z.B. Abdunkeln oder Abschalten von Anzeigeeinheiten, etc.), Applikationen zu beenden, etc. und erst bei einem Event-Alarm "Batteriestatus niedrig" der Stromversorgung und/oder nach Ablauf einer vorgegebenen Wartezeit ein kontrolliertes Herunterfahren zu beginnen.

Eine zweckmäßige Weiterbildung des erfindungsgemäßen Verfahrens sieht vor, dass für die Zuordnung zwischen Stromversorgungskomponenten und identifizierten Steueranwendungen und/oder für eine Eingabe von Konfigurationsparametern und/oder vorgebbaren Aktionen der Steueranwendungen eine Authentifizierung vorgesehen wird. Ein Umfang der identifizierten Stromversorgungskomponenten und/oder Steueranwendungen und/oder zulässigen Zuordnungs- und/oder Konfigurationsmöglichkeiten können idealerweise durch unterschiedliche Nutzerrollen definiert werden. Damit wird der Zugriff z.B. über die zumindest eine Ein-/Ausgabeeinheit auf die Daten und Zuordnungs- und Konfigurationsmöglichkeiten bzw. auf das Steuerungssystem für Stromversorgungskomponenten auf einfache und effiziente Weise eingeschränkt und vor Manipulation sowie unberechtigten Zugriffen geschützt. Zur Authentifizierung kann beispielsweise ein Nutzername mit zugehörigem Passwort genutzt werden. Weiterhin können durch Definition unterschiedlicher Nutzerrollen unterschiedliche Sichten auf Stromversorgungskomponenten und Steuerungsanwendungen angeboten werden - z.B. Einschränkungen auf bestimmte Anlagenabschnitte, auf eine oder mehrere Anlagen, Ausgabe von Daten nur für Diagnosezwecke, etc.

Idealerweise wird als Steuerungssystem für Stromversorgungskomponenten ein Steuerungssystem umfassend eine zentrale Servereinheit mit zugeordneter Datenbank, lokalen Servereinheiten, welche den Stromversorgungskomponenten fix zugeordnet sind, und Clienteinheiten zu jeder lokalen Servereinheit verwendet. Ein derartiges Steuerungssystem für Stromversorgungskomponenten ist aus der bisher unveröffentlichten europäischen Patentanmeldung EP 18156846.0 bekannt. Ein derartiges Steuerungssystem weist den Vorteil auf, dass eine Belastung der Stromversorgungskomponenten durch Datenkommunikation und Datenverarbeitung möglichst gering gehalten wird, da beispielsweise Daten zu den Stromversorgungskomponenten vom Steuerungssystem zur Verfügung gestellt werden können und nicht von der jeweiligen Stromversorgungskomponenten direkt abgefragt werden müssen. Das Steuerungssystem und insbesondere die zentrale Servereinheit mit der zugeordneten Datenbank stellen damit eine Art "Datendrehkreuz" für Zuordnung, Administration und Konfiguration der in zumindest einer Anlage verfügbaren Steueranwendungen dar, durch welches die kommunikations- und datentechnische Belastung der einzelnen Stromversorgungskomponente, aber auch der jeweiligen Steueranwendungen erheblich reduziert wird.

Weiterhin wird durch die Kommunikations- und Datenverarbeitungsarchitektur des Steuerungssystems eine freiskalierbare Server-Client-Beziehung, idealerweise eine n-zu-m-Beziehung, ermöglicht. Für Zuordnung, Administration und Konfiguration von Steueranwendungen wird auf das Steuerungssystem zugegriffen - z.B. über zumindest eine Ein-/Ausgabeeinheit mittels Client-Applikationen. Eine Anzahl dieser Client-Applikationen ist beispielsweise durch Konfiguration, Kapazität, etc. des Steuerungssystems, insbesondere der zentralen Servereinheit, vorgegeben und ist damit unabhängig von der Anzahl der durch das Steuerungssystem identifizierten Stromversorgungskomponenten und Steuerungsanwendungen. Weiterhin bietet ein derartiges Steuerungssystem wie in der bisher unveröffentlichten europäischen Patentanmeldung EP 18156846.0 beschrieben, den Vorteil, dass es ohne funktionale Einschränkungen auf verschiedenen Hardwarearchitekturvarianten (z.B. stationäres PC-System, verteiltes Rechnersystem, Cloud Computing) ablauffähig ist. Damit kann mit dem Steuerungssystem sehr einfach eine Verbindung zu zumindest einer Anlage bzw. zu deren Stromversorgungskomponenten und Steueranwendungen über ein Kommunikationsnetz (z.B. Ethernet) aufgebaut werden.

Idealerweise wird für jede identifizierte Steueranwendung im Steuerungssystem für Stromversorgungskomponenten eine Clienteinheit für eine Kommunikation zwischen der identifizierten Steueranwendung und der zentralen Servereinheit des Steuerungssystems erstellt. Die Steueranwendung auf der jeweiligen Steuer- und/oder Computereinheit fungiert dann als lokale Servereinheit für die Kommunikation zur generierten Clienteinheit. Die Clienteinheit kann beispielsweise auf Basis einer Vorlageeinheit, eines so genannten Templates, erstellt werden.

Eine bevorzugte Ausführungsvariante des erfindungsgemäßen Verfahrens sieht vor, dass die Zuordnungen zwischen den Stromversorgungskomponenten und den identifizierten Steueranwendungen zentral im Steuerungssystem für Stromversorgungskomponenten gespeichert werden. Die Überwachung der Stromversorgungskomponenten auf Event-Alarme wird idealerweise ebenfalls durch das Steuerungssystem für Stromversorgungskomponenten durchgeführt. Dabei wird die gesamte Kommunikation von der Stromversorgungskomponente zu den jeweils zugeordneten Steueranwendungen über das Steuerungssystem für Stromversorgungskomponenten durchgeführt und damit vor allem die kommunikations- und datentechnische Belastung der einzelnen Stromversorgungskomponente reduziert. Weiterhin bietet diese Ausführungsvariante des erfindungsgemäßen Verfahrens die Möglichkeit, einer Stromversorgungskomponente auch Steueranwendungen zuzuordnen, welche auf Steuer- und/oder Computereinheiten installiert sind, die durch eine Störung dieser Stromversorgungskomponente nur indirekt betroffen sind - z.B. Zuordnungen zwischen Stromversorgungen und Steueranwendungen unterschiedlicher, z.B. aufeinanderfolgender Abschnitte einer Anlage.

Es ist weiterhin von Vorteil, wenn eine Änderung der Konfigurationsparameter und/oder vorgebbare Aktionen der jeweiligen Steueranwendung zentral über das Steuerungssystem für Stromversorgungskomponenten beispielsweise mittels eine an das Steuerungssystem anbindbare Ein-/Ausgabeeinheit durchgeführt wird. Die Änderungen können dabei ohne großen Aufwand z.B. über eine zentrale Ein-/Ausgabeeinheit eingegeben werden und dann an die entsprechende Steueranwendung weitergeleitet werden. Es ist auch möglich, Parameteränderungen oder Änderungen bei vorgebbaren Aktionen vor der Weiterleitung an die jeweilige Steueranwendung auf Konsistenz, Plausibilität und/oder mögliche Fehler (z.B. zu lange Wartezeit, Berücksichtigung des Herunterfahrens einer oder mehrerer anderer Steuer- und/oder Computereinheiten, etc.) zu prüfen.

Günstiger Weise werden bei einer zentralen Überwachung durch das Steuerungssystem für Stromversorgungskomponenten zentral auf dem Steuerungssystem Daten zu Event-Alarmen für Diagnosezwecke gesammelt. Dabei können von Stromversorgungskomponenten eingehende Event-Alarme wie z.B. Störung bei der Stromversorgung, Stromversorgungskomponente überhitzt, Stromversorgungskomponente wird abgeschaltet, Umschaltung auf Pufferbetrieb bei einer unterbrechungsfreien Stromversorgung (USV), Batteriestatus einer USV z.B. niedrig, Störung bei der Stromversorgung beendet, etc. beispielsweise ausgegeben oder angezeigt und dann gegebenenfalls z.B. in einer so genannten Log-Datei gemeinsam mit einem Zeitstempel gesammelt werden. Die gesammelten Event-Alarme bzw. die Log-Dateien können dann beispielsweise über die zumindest eine Ein-/Ausgabeeinheit des Steuerungssystems abgefragt und für Diagnosezwecke ausgewertet werden. Dadurch kann auf einfache Weise festgestellt werden, ob bei bestimmten Stromversorgungskomponenten oder in bestimmten Strompfaden gehäuft Störungen auftreten.

Alternativ zu einer zentralen Speicherung der Zuordnungen und einer zentralen Überwachung durch das Steuerungssystem für Stromversorgungskomponenten können die Zuordnungen zwischen den Stromversorgungskomponenten und den identifizierten Steueranwendungen lokal in der jeweiligen Steueranwendung und/oder der jeweils zugeordneten Stromversorgungskomponente gespeichert werden. Nach erfolgter Zuordnung kann die Verbindung zum Steuerungssystem für Stromversorgungskomponenten über das Kommunikationsnetz wieder getrennt werden. D.h. es wird zwischen Steuerungssystem und z.B. einer Anlage nur für die Identifikation von Stromversorgungskomponenten und Steueranwendungen dieser Anlage, für die Zuordnung zwischen Stromversorgungskomponenten und Steueranwendungen und gegebenenfalls für eine Konfiguration der Steueranwendung eine Verbindung aufgebaut. Danach wird diese Verbindung getrennt. Die Überwachung der Stromversorgungskomponenten auf Event-Alarm erfolgt dabei lokal durch die jeweils zugeordnete Steueranwendung bzw. durch die jeweils zugeordneten Steueranwendungen. Es müssen dabei allerdings direkte Verbindungen über ein Kommunikationsnetz zwischen den Stromversorgungskomponenten und den jeweils zugeordneten Steueranwendungen bzw. Steuer- und/oder Computereinheiten bestehen. Die lokale Speicherung der Zuordnungen sowie die lokale Überwachung der Stromversorgungskomponenten auf Event-Alarme sind besonders gut für Anlagen geeignet, welche beispielsweise eine geringe Rechnerleistung bzw. geringe Rechnerressourcen aufweisen. Weiterhin ist die lokale Speicherung der Zuordnung und die die lokale Überwachung der Stromversorgungskomponenten auf Event-Alarme auch gut für Anlagen geeignet, bei welchen bewusst eine Minimierung von Anwendungsprogrammen zur Risikoreduzierung angestrebt wird. Derartige Anlagen werden beispielsweise für sehr spezielle Funktionen oder Aufgabenbereiche eingesetzt und sollen durch möglichst wenige bis keine zusätzlichen Anwendungen beeinträchtigt werden.

Änderungen von Konfigurationsparametern und/oder vorgebbare Aktionen der jeweiligen Steueranwendung können idealerweise ebenfalls lokal - insbesondere über eine Ein-/Ausgabeeinheit der jeweiligen Steuer- und/oder Computereinheit - durchgeführt werden. Auf diese Weise können z.B. Konfigurationsparameter und/oder Aktionsabläufe im Fall eines Event-Alarms auf einer zugeordneten Stromversorgungskomponente sehr einfach direkt in der Steueranwendung angepasst werden.

Weiterhin ist es vorteilhaft, wenn Daten zu Event-Alarmen von Stromversorgungskomponenten lokal durch die jeweils zugeordnete Steueranwendung für Diagnosezwecke gesammelt werden. Damit kann z.B. direkt bei der jeweiligen Steuer- und/oder Computereinheit abgerufen werden, welche Event-Alarme von der jeweils installierten Steueranwendung festgestellt wurden bzw. welche vorgebbare Aktionen durchgeführt wurden.

Eine zweckmäßige Ausgestaltung des erfindungsgemäßen Verfahrens sieht vor, dass für eine Kommunikationsverbindung zwischen dem Steuerungssystem für Stromversorgungskomponenten und der Steueranwendung eine so genannte OPC-UA-Schnittstelle für einen Datenaustausch eingesetzt wird. Durch den Einsatz einer OPC-UA-Schnittstelle für die Kommunikation wird eine Kommunikation nach einem offenen, hersteller- und geräteunabhängigen Standard ermöglicht. Weiterhin bietet OPC-UA eine entsprechende Sicherheit für die Datenübertragung und einen gewissen Schutz vor Manipulation durch Authentifizierung und Autorisierung, Verschlüsselung und Datenintegrität durch Signieren z.B. mittels der spezifischen Firmware der jeweiligen Stromversorgungskomponente.

Idealerweise wird für ein Versenden des Detektionsaufrufs das so genannte Discovery and Configuration Protocol (DCP) verwendet. Das Discovery and Configuration Protocol oder kurz DCP ist eine Protokolldefinition innerhalb des Kontextes von PROFINET, einem offenen industriellen genutzten Ethernet-Standards, welcher für Automatisierung genutzt wird. Mittels DCP können daher auf einfache Weise mittels eines Kommunikationsnetzes (z.B. Ethernet) angebundene Stromversorgungskomponenten zumindest einer Automatisierungsanlage sowie die auf den Steuer- und/oder Computereinheiten der zumindest einen Automatisierungsanlage installierten Steueranwendungen rasch und einfach detektiert bzw. über einen vom Steuerungssystem für Stromversorgungskomponenten gesendeten, so genannten Multicast ermittelt werden.

### Kurzbeschreibung der Zeichnung

Die Erfindung wird nachfolgend in beispielhafter Weise anhand der beigefügten Figuren erläutert. Es zeigen dabei:
- Figur 1: schematisch einen beispielshaften Ablauf des erfindungsgemäßen Verfahrens zum Überwachen, Steuern und kontrollierten Herunterfahren von Steuer- und/oder Computereinheiten zumindest einer Anlage
- Figur 2: eine beispielshafte Variante des erfindungsgemäßen Verfahrens zum Überwachen, Steuern und kontrollierten Herunterfahren von Steuer- und/oder Computereinheiten, bei welcher eine zentrale Überwachung der Stromversorgungskomponenten vorgesehen ist;
- Figur 3: eine weitere, beispielshafte Variante des erfindungsgemäßen Verfahrens zum Überwachen, Steuern und kontrollierten Herunterfahren von Steuer- und/oder Computereinheiten, bei welcher eine lokale Überwachung der Stromversorgungskomponenten vorgesehen ist.

### Ausführung der Erfindung

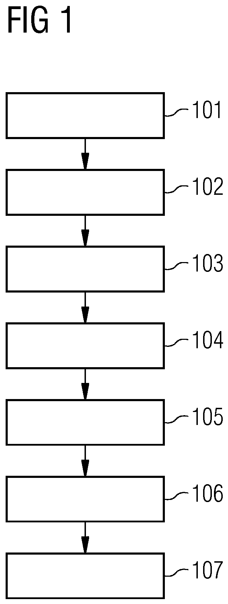

Figur 1 zeigt schematisch und beispielhaft einen Ablauf des erfindungsgemäßen Verfahrens zum Überwachen, Steuern und kontrollierten Herunterfahren von Steuer- und/oder Computereinheiten zumindest einer Anlage. Dabei werden die Steuer- und/oder Computereinheiten der zumindest einen Anlage von Stromversorgungskomponenten der zumindest einen Anlage mit Energie versorgt. Um ein gesichertes und kontrolliertes Herunterfahren einer Steuer- und/oder Computereinheiten im Fall einer Störung im zugehörigen Strompfad oder bei der versorgenden Stromversorgungskomponente sicherzustellen, wird in einem Installationsvorgang 101 auf den Steuer- und/oder Computereinheiten jeweils eine Steueranwendung installiert. In einem Vorgang zum Kommunikationsaufbau 102 wird über ein Kommunikationsnetz (z.B. Ethernet) eine Verbindung beispielsweise zwischen der zumindest einen Anlage bzw. zwischen den Stromversorgungskomponenten und installierten Steueranwendungen der zumindest einen Anlage und einem Steuerungssystem für Stromversorgungskomponenten aufgebaut. Die Stromversorgungskomponenten sowie die Steuer- und/oder Computereinheiten mit den installierten Steueranwendungen sollten dabei ebenfalls eine Verbindung zum Kommunikationsnetz (z.B. Ethernet) aufweisen.

Als Steuerungssystem für Stromversorgungskomponenten kann beispielsweise ein Steuerungssystem verwendet werden, wie in der bisher unveröffentlichten europäischen Patentanmeldung EP 18156846.0 beschrieben. Ein derartiges Steuerungssystem umfasst eine zentrale Servereinheit mit zugeordneter Datenbank, lokale Servereinheiten, welche den Stromversorgungskomponenten der zumindest einen Anlage fest zugeordnet sind, und Clienteinheiten zu jeder lokalen Servereinheit.

Während eines Detektionsvorgangs 103 wird vom Steuerungssystem für Stromversorgungskomponenten ein Detektionsaufruf über das Kommunikationsnetz ausgesendet. Die an das Kommunikationsnetz angebundenen Stromversorgungskomponenten sowie die auf den Steuer- und/oder Computereinheiten verfügbaren Steueranwendungen werden durch den Detektionsaufruf angesprochen. Das Versenden des Detektionsaufrufs wird beispielsweise in Form eines so genannten Multicasts durchgeführt, wobei z.B. das so genannte Discovery and Configuration Protokoll oder kurz DCP verwendet wird. Beim Detektionsvorgang 103 werden von den Stromversorgungskomponenten sowie von den Steueranwendungen z.B. Antwortnachrichten mit eindeutigen Identifikationsdaten (z.B. MAC-Adresse der Stromversorgungskomponente oder der Steuer- und/oder Computereinheit der Steueranwendung, einen Gerätenamen und/oder -kennung, eine IP-Adresse, etc.) an das Steuerungssystem zurückgesendet und damit die Stromversorgungskomponenten und Steueranwendungen identifiziert.

Für identifizierte Steueranwendungen kann beispielsweise im Steuersystem für Stromversorgungskomponenten jeweils eine Clienteinheit für eine Kommunikation zwischen der jeweils identifizierten Steueranwendung und dem Steuerungssystem, insbesondere der zentralen Servereinheit des Steuerungssystems für Stromversorgungskomponenten, erstellt werden. Für das Erstellen der Clienteinheit kann beispielsweise eine Vorlageeinheit - ein so genanntes Template - verwendet werden. Von der Steueranwendung wird dann die Funktion der lokalen Servereinheit für die Kommunikation zur jeweils generierten Clienteinheit übernommen.

Die identifizierten Stromversorgungskomponenten und Steueranwendungen der zumindest einen Anlage können dann für einen Zuordnungsvorgang 104 beispielsweise über eine Ein-/Ausgabeeinheit angezeigt und/oder ausgegeben werden. Die Ein-/Ausgabeeinheit kann an das Steuerungssystem für Stromversorgungskomponenten z.B. mittels einer Applikation bzw. Webapplikation angebunden werden. Die identifizierten Stromversorgungskomponenten und Steueranwendungen werden dann beispielsweise in einem standardisierten Webbrowser als Benutzerschnittstelle angezeigt bzw. ausgegeben werden, wobei ohne Einschränkungen z.B. ein stationärer PC, stationäre PC-Systeme und/oder mobile Endgeräte (z.B. Tablet-PC, Handheld, etc.) für die Ein-/Ausgabeeinheit genutzt werden können.

Beim Zuordnungsvorgang 104 werden dann den identifizierten Stromversorgungskomponenten die jeweiligen identifizierten Steueranwendungen zugeordnet. Das bedeutet, dass einer vom Steuerungssystem identifizierten Stromversorgungskomponente zumindest eine Steueranwendung zugeordnet wird, welche auf einer von dieser Stromversorgungskomponente mit Energie versorgten Steuer- und/oder Computereinheit installiert ist. Werden mehrere Steuer- und/oder Computereinheiten von einer Stromversorgungskomponente (z.B. Stromversorgung oder unterbrechungsfreien Stromversorgung) versorgt, so können alle auf diesen Steuer- und/oder Computereinheiten installierten Steueranwendungen dieser Stromversorgungskomponente zugeordnet werden. Weiterhin besteht die Möglichkeit auch Zuordnungen zwischen Stromversorgungskomponenten und Steueranwendungen von Steuer- und/oder Computereinheiten einzurichten, welche einander bei Störungen z.B. nur indirekt beeinflussen. So kann beispielsweise der Ausfall der Stromversorgung in einem Anlagenabschnitt oder einer Anlage einen Einfluss auf einen vorangehenden und/oder folgenden Anlageabschnitt oder eine vorangehende und/oder folgende Anlage derart haben, dass auch im vorangehenden und/oder folgenden Anlagenabschnitt bzw. in der vorangehenden und/oder folgenden Anlage Steuer- und/oder Computereinheiten - gegebenfalls trotz funktionierender Energieversorgung - heruntergefahren werden müssen.

Weiterhin besteht im Zuordnungsvorgang 104 nach der durchgeführten Zuordnung zwischen den Stromversorgungskomponenten und den Steueranwendungen die Möglichkeit, Konfigurationsparameter und/oder vorgebbare Aktionen bei den Steueranwendungen z.B. in Abhängigkeit von den jeweiligen Stromversorgungskomponenten und von auftretenden Event-Alarmen bei den jeweils zugeordneten Stromversorgungen einzustellen. Dabei können beispielsweise Pufferzeiten wie z.B. eine so genannte Totzeit (Abwarten der Steueranwendung ohne Aktion), eine Wartezeit (Vorbereiten eines Herunterfahrens bzw. Shut-Downs durch die Steueranwendung), etc. als Konfigurationsparameter bei der Steueranwendung eingestellt werden. Weiterhin können Aktionen wie z.B. keine Aktion in der Totzeit, Energiesparmaßnahmen einleiten bei Pufferbetrieb der Stromversorgung, Beenden von Applikationen, Speichern von Daten, Herunterfahren der Steuer- und/oder Computereinheit, etc. einzeln oder als auszuführende Abfolge (z.B. in Form eines so genannten Batches) bestimmten Event-Alarmen zugewiesen werden.

Die Eingabe der Konfigurationsparameter und/oder der vorgebbaren Aktion der jeweiligen Steueranwendung kann wie die Zuordnung über die Ein-/Ausgabeeinheit vorgenommen werden. Dabei können beispielsweise mittels der Webapplikation bzw. über den Webbrowser die Einstellungen (Parameter, Aktionen) der jeweiligen Steueranwendung angezeigt werden. Weiterhin können Plausibilitätsprüfungen der Eingaben durchgeführt werden.

Zur Durchführung des Zuordnungsvorgangs 104 - d.h. für die Zuordnung von Stromversorgungskomponenten und Steueranwendungen bzw. für eine Eingabe der Konfigurationsparameter und Aktionen vor allem über die Ein-/Ausgabeeinheit kann eine Authentifizierung z.B. mittels Nutzername und Passwort vorgesehen werden. Ein Umfang der angezeigten Daten (z.B. Stromversorgungskomponenten, Steueranwendungen, Parameter, etc.) sowie zulässige Konfigurationsmöglichkeiten (z.B. nur Anzeige/Lesezugriff, durchführbare Zuordnungen, Parameteränderungen, etc.) können dabei durch unterschiedliche Nutzerrollen definiert werden. Werden beispielsweise beim Zuordnungsvorgang 104 keine Konfigurationsparameter für eine Steueranwendung eingegeben und/oder vorgebbare Aktionen für bestimmte Event-Alarme eingestellt, so können durch das Steuerungssystem Standard- bzw. Default-Werte und/oder Default-Aktionen vorgegeben werden.

Nach dem Zuordnungsvorgang 104 werden dann in einem Speichervorgang 105 die Zuordnungen zwischen den Stromversorgungskomponenten und den Steueranwendungen und gegebenenfalls vorgenommene Konfigurationen der Steueranwendungen abgespeichert. In einem Überwachungsvorgang 106 werden dann die Stromversorgungskomponenten auf auftretende Event-Alarme überwacht.

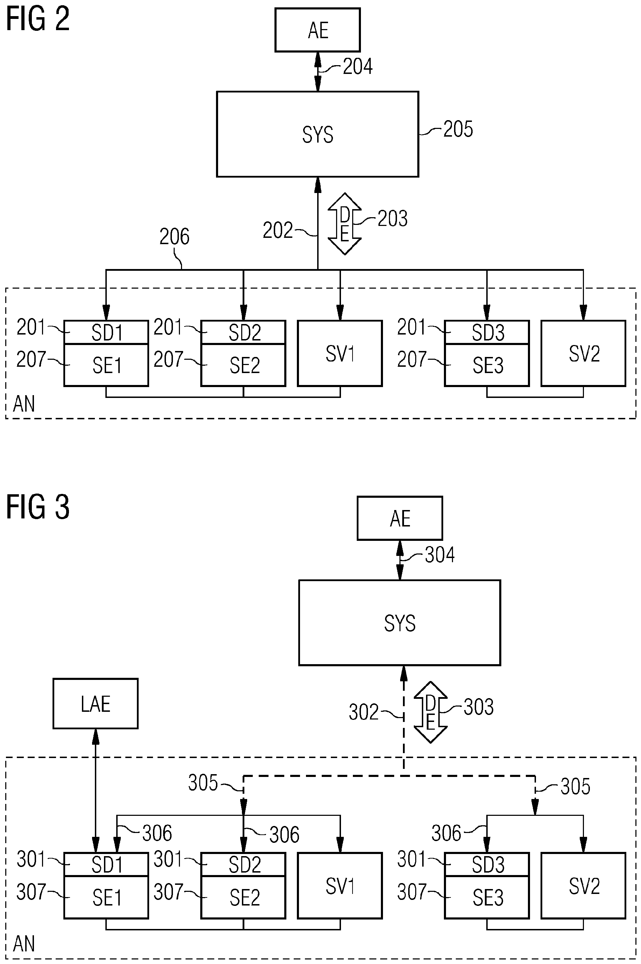

Die Abspeicherung der Zuordnungen beim Speichervorgang 105 sowie die Überwachung der Stromversorgungskomponenten auf Event-Alarme im Überwachungsvorgang 106 kann in einer Ausführungsvariante des erfindungsgemäßen Verfahrens - wie beispielsweise in Figur 2 dargestellt - zentral im Steuerungssystem für Stromversorgungskomponenten erfolgen, wobei das Steuerungssystem bei dieser Variante permanente Kommunikationsverbindungen mit den Stromversorgungskomponenten und den Steueranwendungen z.B. mittels OPC-UA-Schnittstelle aufweist.

Alternativ können die Abspeicherung der Zuordnungen beim Speichervorgang 105 sowie die Überwachung der Stromversorgungskomponenten im Überwachungsvorgang 106 - wie z.B. in der in Figur 3 beispielhaft dargestellten Ausführungsvariante des erfindungsgemäßen Verfahrens - lokal in der jeweiligen Steueranwendung erfolgen. Bei dieser Ausführungsvariante wird nach dem Speichervorgang 105 die Verbindung des Steuerungssystems für Stromversorgungskomponenten über das Kommunikationsnetz zu den Stromversorgungskomponenten und Steueranwendungen getrennt. Es müssen allerdings lokale Kommunikationsverbindungen über ein Kommunikationsnetz (z.B. Ethernet) zwischen den Stromversorgungskomponenten und den jeweils zugeordneten Steueranwendungen bestehen. Dabei kann beispielsweise für die lokale Kommunikation die Stromversorgungskomponente eine lokale Servereinheit aufweisen und von der Steueranwendung eine Clientfunktion übernommen werden.

In einem Durchführungsvorgang 107 werden bei Auftreten eines Event-Alarms (z.B. Umschalten der Stromversorgung in Pufferbetrieb, Niedriger Batteriestatus, Überhitzung der Stromversorgungskomponente, Abschalten der Stromversorgung, etc.) bei einer Stromversorgungskomponente von allen dieser Stromversorgungskomponente zugeordneten Steueranwendung die entsprechenden, vorgebbaren bzw. mittels Konfiguration eingestellten Aktionen auf der zugehörigen Steuer- und/oder Computereinheit eingeleitet. Die Aktionen können beispielsweise als Kommandozeilen basierte Applikation oder als so genanntes Batchfile - insbesondere wenn mehrere Aktionen durchlaufen werden sollen - ausgeführt sein. Parallel zum Einleiten einer oder mehrerer Aktionen kann von der Steueranwendung z.B. eine Alarm oder eine Alarmnachricht an eine Ein-/Ausgabeeinheit gesendet werden.

Das bedeutet, durch das erfindungsgemäße Verfahren können vor allem bei einer längeren Störung der Energieversorgung die betroffenen Steuer- und/oder Computereinheiten kontrolliert und z.B. unter Berücksichtigung der jeweiligen Herunterfahr- bzw. Shut-Down-Zeiten heruntergefahren werden. Nach Beendigung der Störung in der Energieversorgung können beispielsweise durch einen speziellen Event-Alarm (z.B. "Energieversorgung wieder vorhanden") die betroffenen Steuer- und/oder Computereinheiten z.B. durch Aussenden eines Spannungsimpulses wieder neu gestartet werden.

In Figur 2 ist beispielhaft eine Ausführungsvariante des erfindungsgemäßen Verfahrens dargestellt, bei welcher eine zentrale Überwachung der Stromversorgungskomponenten SV1, SV2 vorgesehen ist und eine permanente Kommunikationsverbindung zum Steuerungssystem SYS für Stromversorgungskomponenten SV1, SV2 besteht. Figur 2 zeigt dazu eine beispielhafte Anlage AN, welche beispielhaft zwei Stromversorgungskomponenten SV1, SV2 umfasst. Von den Stromversorgungskomponenten SV1, SV2 werden beispielsweise Steuer- und/oder Computereinheiten SE1, SE2, SE3 mit Energie versorgt. Dabei werden von einer ersten Stromversorgungskomponente SV1 z.B. eine erste und zweite Steuer- und/oder Computereinheiten SE1, SE2 mit Energie versorgt und von einer zweiten Stromversorgungskomponente SV2 z.B. eine dritte Steuer- und/oder Computereinheit SE3.

Im Installationsvorgang 201 wird auf den Steuer- und/oder Computereinheiten SE1, SE2, SE3 jeweils eine Steueranwendung SD1, SD2, SD3 installiert. Im Vorgang zum Kommunikationsaufbau 202 wird über ein Kommunikationsnetz eine Kommunikationsverbindung zum Steuerungssystem SYS für Stromversorgungskomponenten SV1, SV2 aufgebaut. Dazu kann beispielsweise das Steuerungssystem SYS mit dem Kommunikationsnetz (z.B. Ethernet) verbunden werden, an welches die Anlage AN bzw. die Stromversorgungskomponenten SV1, SV2 und die Steuer- und/oder Computereinheiten SE1, SE2, SE3 angebunden sind. Vom Steuersystem SYS wird im Detektionsvorgang 203 ein Detektionsaufruf DE (z.B. ein Multicast mittels DCP-Protokoll) über das Kommunikationsnetz ausgesendet. Auf den Detektionsaufruf DE werden von den Stromversorgungskomponenten SV1, SV2 sowie von den auf den Steuer- und/oder Computereinheiten SE1, SE2, SE3 installierten Steueranwendungen SD1, SD2, SD3 Antwortnachrichten an das Steuerungssystem SYS gesendet und damit die Stromversorgungskomponenten SV1, SV2 und die Steueranwendungen SD1, SD2, SD3 am Steuerungssystem SYS identifiziert.

Im Zuordnungsvorgang 204 wird dann die Zuordnung zwischen den identifizierten Stromversorgungskomponenten SV1, SV2 und den identifizierten Steueranwendungen SD1, SD2, SD3 der beispielhaften Anlage AN durchgeführt. Dabei werden beispielsweise der ersten Stromversorgungskomponente SV1 die Steueranwendungen SD1, SD2 zugeordnet, welche auf den von der ersten Stromversorgungskomponente SV1, SV2 versorgten Steuer- und/oder Computereinheiten SE1, SE2 installiert sind. Der zweiten Stromversorgungskomponente SV2 wird z.B. die Steueranwendung SD3 zugeordnet, welche auf der von der zweiten Stromversorgungskomponente SV2 versorgten Steuer- und/oder Computereinheit SE3 installiert ist. Falls beispielsweise eine Störung bei der ersten Stromversorgungskomponente SV1 eine indirekte Auswirkung auf die dritte Steuer- und/oder Computereinheit SE3 hat, kann beispielsweise der ersten Stromversorgungskomponente SV1 auch die auf der dritten Steuer- und/oder Computereinheit SE3 installierte Steueranwendung SD3 zugeordnet werden. Analog gilt dies auch für die auf der ersten und/oder zweiten Steuer- und/oder Computereinheit SE1, SE2 installierten Steueranwendungen SD1, SD2, falls eine Störung bei der zweiten Stromversorgungskomponente SV2 auch auf diese Steuer- und/oder Computereinheiten SE1, SE2 eine zumindest indirekte Auswirkung aufweisen sollte.

Die Zuordnung zwischen den Stromversorgungskomponenten SV1, SV2 und den Steueranwendungen SD1, SD2, SD3 sowie gegebenenfalls eine Eingabe von Konfigurationsparametern und/oder vorgebbaren Aktionen für die Steueranwendungen SD1, SD2, SD3 im Zuordnungsvorgang 204 kann beispielsweise über eine Ein-/Ausgabeeinheit AE vorgenommen werden, welche an das Steuerungssystem SYS angebunden ist. Nach erfolgter Zuordnung und gegebenfalls einer Konfiguration der Steueranwendungen SD1, SD2, SD3 werden die Zuordnungen im Speichervorgang 205 zentral im Steuerungssystem SYS für Stromversorgungskomponenten SV1, SV2 abgespeichert. Dazu kann z.B. bei Verwendung des in der bisher unveröffentlichten europäischen Patentanmeldung EP 18156846.0 beschriebenen Steuerungssystems SYS die der zentralen Servereinheit zugeordnete Datenbank genutzt werden. Gegebenenfalls durchgeführte Konfigurationen der Steueranwendungen SD1, SD2, SD3 können z.B. ebenfalls zentral abgespeichert und/oder über das Kommunikationsnetz z.B. mittels OPC-UA-Schnittstelle an die jeweiligen Steueranwendungen SD1, SD2, SD3 übertragen werden.

Beim Überwachungsvorgang 206 werden dann die Stromversorgungskomponenten SV1, SV2 zentral vom Steuerungssystem SYS über die bestehende Kommunikationsverbindung (z.B. mittels OPC-UA) auf Auftreten von Störungen in der Energieversorgung und damit verbundene Event-Alarme überwacht. Vom Steuerungssystem können während des Überwachungsvorgangs 206 Daten zu Event-Alarmen für Diagnosezwecke gesammelt und gespeichert werden. Eine Abfrage und Auswertung dieser Daten kann beispielsweise über die an das Steuerungssystem SYS angebundene Ein-/Ausgabeeinheit AE durchgeführt werden.

Wird vom Steuerungssystem SYS während des Überwachungsvorgangs 206 z.B. bei der ersten oder zweiten oder bei beiden Stromversorgungskomponente SV1, SV2 festgestellt, so werden anhand der abgespeicherten Zuordnungen die jeweils zugeordneten Steueranwendungen SD1, SD2, SD3 vom Steuerungssystem SYS angesprochen. Von den jeweils angesprochenen Steueranwendungen SD1, SD2, SD3 werden im Durchführungsvorgang 207 auf den jeweils zugehörigen Steuer- und/oder Computereinheiten SE1, SE2, SE3 die jeweils vorgegebenen bzw. konfigurierten Aktionen eingeleitet. Bei einer Störung, welche z.B. eine konfigurierte Totzeit der jeweiligen Steueranwendung SD1, SD2, SD3 überschreitet, können die zugehörige Steuer- und/oder Computereinheiten SE1, SE2, SE3 kontrolliert herunterfahren. Zusätzlich können während Durchführungsvorgang 207 von den Steueranwendungen SD1, SD2, SD3 z.B. Alarme bzw. Alarmmeldungen versendet werden, welche z.B. auf der Ein-/Ausgabeeinheit AE angezeigt werden können oder z.B. einem Servicemitarbeiter auf einem mobilen Endgerät ausgegeben werden können.

Änderungen oder Anpassungen der Konfigurationen der Steueranwendungen SD1, SD2, SD3 (z.B. Änderungen der Konfigurationsparameter und/oder der vorgegebenen Aktionen für den Durchführungsvorgang 207) können beispielsweise über das Steuerungssystem SYS bzw. über die an das Steuerungssystem SYS angebundene Ein-/Ausgabeeinheit AE vorgenommen werden. Die Änderungen und Anpassungen können ebenfalls zentral im Steuerungssystem SYS gespeichert werden und gegebenenfalls an die jeweilige Steueranwendung SD1, SD2, SD3 zur Verarbeitung weitergeleitet werden.

Figur 3 zeigt beispielhaft eine Ausführungsvariante des erfindungsgemäßen Verfahrens, bei welcher eine lokale Überwachung der Stromversorgungskomponenten SV1, SV2 vorgesehen ist. Dabei ist keine permanente Kommunikationsverbindung zum Steuerungssystem SYS für Stromversorgungskomponenten SV1, SV2 notwendig. Es müssen allerdings Kommunikationsverbindungen zwischen den jeweiligen Steuer- und/oder Computereinheiten SE1, SE2, SE3 und den überwachten Stromversorgungskomponenten SV1, SV2 bestehen.

Figur 3 zeigt wieder die beispielhafte Anlage AN mit beispielhaften zwei Stromversorgungskomponenten SV1, SV2, wobei wieder beispielhaft von der ersten Stromversorgungskomponente SV1 die erste und zweite Steuer- und/oder Computereinheiten SE1, SE2 und von der zweiten Stromversorgungskomponente SV2 die dritte Steuer- und/oder Computereinheit SE3 mit Energie versorgt werden. Im Installationsvorgang 301 wird auf den Steuer- und/oder Computereinheiten SE1, SE2, SE3 jeweils eine Steueranwendung SD1, SD2, SD3 installiert und im Vorgang zum Kommunikationsaufbau 302 über ein Kommunikationsnetz eine Kommunikationsverbindung zum Steuerungssystem SYS für Stromversorgungskomponenten SV1, SV2 aufgebaut.

Wie in Figur 2 wird vom Steuersystem SYS im Detektionsvorgang 303 ein Detektionsaufruf DE (z.B. ein Multicast mittels DCP-Protokoll) über das Kommunikationsnetz ausgesendet. Auf den Detektionsaufruf DE werden von den Stromversorgungskomponenten SV1, SV2 sowie von den auf den Steuer- und/oder Computereinheiten SE1, SE2, SE3 installierten Steueranwendungen SD1, SD2, SD3 Antwortnachrichten an das Steuerungssystem SYS gesendet und damit die Stromversorgungskomponenten SV1, SV2 und die Steueranwendungen SD1, SD2, SD3 am Steuerungssystem SYS identifiziert. Während des Zuordnungsvorgangs 304 erfolgt wieder eine Zuordnung zwischen den identifizierten Stromversorgungskomponenten SV1, SV2 und den identifizierten Steueranwendungen SD1, SD2, SD3 der beispielhaften Anlage AN. Die Zuordnung sowie gegebenfalls eine Konfiguration der Steueranwendungen SD1, SD2, SD3 (Eingabe von Konfigurationsparametern und Aktionen)können z.B. über die an das Steuerungssystem SYS angebundene Ein-/Ausgabeeinheit AE durchgeführt werden.

Bei der Zuordnung 304 ist allerdings zu beachten, dass zwischen der Steueranwendung SD1, SD2, SD3 und zugeordneter Stromversorgungskomponente SV1, SV2 eine direkte Kommunikationsverbindung besteht. In der Ausführungsvariante, welche in Figur 3 beispielhaft dargestellt ist, bestehen beispielsweise zwischen der ersten Stromversorgungskomponente SV1 und den auf der ersten und zweiten Steuer- und/oder Computereinheiten SE1, SE2 installierten Steueranwendungen SD1, SD2 und der zweiten Stromversorgungskomponente SV2 und der auf der dritten Steuer- und/oder Computereinheit SE3 installierten Steueranwendung SD3 Kommunikationsverbindungen. Das bedeutet, dass z.B. nur eine Zuordnung zwischen erster Stromversorgungskomponente SV1 und den Steueranwendungen SD1, SD2 der ersten und zweiten Steuer- und/oder Computereinheiten SE1, SE2 bzw. eine Zuordnung zwischen der zweiten Stromversorgungskomponenten SV2 und der Steueranwendung SD3 der dritten Steuer- und Computereinheit SE3 sinnvoll ist.

Nach erfolgter Zuordnung werden die eingegebenen Zuordnungen zwischen den identifizierten Stromversorgungskomponenten SV1, SV2 und den identifizierten Steueranwendungen SD1, SD2, SD3 werden in einem Speichervorgang 305 zuerst vom Steuerungssystem SYS an die jeweilige Steueranwendungen SD1, SD2, SD3 und Stromversorgungskomponenten SV1, SV2 übertragen. Für die Kommunikation kann beispielsweise eine OPC-UA-Schnittstelle eingesetzt werden. Dann werden die jeweiligen Zuordnungen lokal bei der jeweiligen Steueranwendung SD1, SD2, SD3 und/oder auf der jeweiligen Stromversorgungskomponente SV1, SV2 abgespeichert. Gegebenenfalls im Zuordnungsvorgang 304 eingegebene Konfigurationsparameter und/oder Aktionen werden ebenfalls an die jeweilige Steueranwendung SD1, SD2, SD3 übertragen und lokal abgespeichert. Nach erfolgter lokaler Speicherung der Zuordnungen kann die Kommunikationsverbindung des Steuerungssystems SYS zum Kommunikationsnetz bzw. zu den Stromversorgungskomponenten SV1, SV2 und zu den Steuer- und Computereinheiten SE1, SE2, SE3 bzw. den zugehörigen Steueranwendungen SD1, SD2, SD3 getrennt werden.

Im Überwachungsvorgang 306 werden dann die Stromversorgungskomponenten SV1, SV2 von den jeweils zugeordneten Steueranwendungen SD1, SD2, SD3 lokal über die jeweilige Kommunikationsverbindung auf Auftreten von Event-Alarmen überwacht. D.h. die erste Stromversorgung wird z.B. von den zugeordneten Steueranwendungen SD1, SD2 der ersten und zweiten Steuer- und Computereinheit SE1, SE2 überwacht. Die zweite Stromversorgungskomponente SV2 wird beispielsweise von der zugeordneten Steueranwendung SD3 der dritten Steuer- und/oder Computereinheit SE3 überwacht. Dazu können z.B. die erste bzw. zweite Stromversorgung SV1, SV2 lokale Servereinheiten oder Serverfunktionen aufweisen und die zugordneten Steueranwendungen SD1, SD2, SD3 z.B. als Clienteinheit fungieren.

Bei Auftreten eines Event-Alarms auf der ersten und/oder der zweiten Stromversorgungskomponente SV1, SV2 werden dann von den jeweiligen Steueranwendungen SD1, SD2, SD3 im Durchführungsvorgang 307 die jeweils vorgegebenen Aktionen auf der zugehörigen Steuer- und Computereinheit SE1, SE2, SE3 eingeleitet und gegebenenfalls bei längerer Unterbrechung der Stromversorgung die jeweilige Steuer- und Computereinheit SE1, SE2, SE3 kontrolliert heruntergefahren. Von der jeweiligen Steueranwendung SD1, SD2, SD3 kann beispielsweise im Durchführungsvorgang 307 lokal ein Alarm oder eine Alarmmeldung ausgegeben werden.

Eine Änderung von Konfigurationsparametern und vorgegebenen Aktionen für bestimmte Event-Alarme kann beispielsweise lokal bei der jeweiligen Steueranwendung SD1, SD2, SD3 vorgenommen werden. Dazu kann - wie beispielhaft bei der ersten Steuer- und/oder Computereinheit SE1 dargestellt - eine lokale Ein-/Ausgabeeinheit LAE genutzt werden und z.B. eine Konfiguration der entsprechenden Steueranwendung SD1 geändert bzw. angepasst werden.

## Patentansprüche

1. Verfahren zum Überwachen, Steuern und kontrollierten Herunterfahren von Steuer- und/oder Computereinheiten zumindest einer Anlage, wobei die Steuer- und/oder Computereinheiten mittels Stromversorgungskomponenten mit Energie versorgt werden, **dadurch gekennzeichnet, dass** auf den Steuer- und/oder Computereinheiten der zumindest einen Anlage jeweils eine Steueranwendung installiert wird (101, 201, 301), dass von den Stromversorgungskomponenten und den Steuer- und/oder Computereinheiten der zumindest einen Anlage eine Verbindung zu einem Steuerungssystem für Stromversorgungskomponenten über ein Kommunikationsnetz aufgebaut wird (102, 202, 302), dass neben den Stromversorgungskomponenten der zumindest einen Anlage auch die auf den Steuer- und/oder Computereinheiten der zumindest einen Anlage installierten Steueranwendungen mittels eines von dem Steuersystem über das Kommunikationsnetz ausgesandten Detektionsaufrufs identifiziert werden (103, 203, 303), dass den Stromversorgungskomponenten der zumindest einen Anlage jene identifizierten Steueranwendungen zugeordnet werden (104, 204, 304), welche auf jenen Steuer- und/oder Computereinheiten installiert sind, welche durch eine Störung der jeweiligen Stromversorgungskomponente zumindest beeinflusst werden, dass die Zuordnungen zwischen den Stromversorgungskomponenten und identifizierten Steueranwendungen gespeichert werden (105), dass die Stromversorgungskomponenten auf Event-Alarme überwacht werden (106), und dass bei Auftreten eines Event-Alarms bei einer Stromversorgungskomponente von der zumindest einen zugeordneten Steueranwendung auf der zugehörigen Steuer- und/oder Computereinheit zumindest eine vorgebbare Aktion eingeleitet wird (107, 207, 307).

2. Verfahren nach Anspruch 1, **dadurch gekennzeichnet, dass** für eine Zuordnung der identifizierten Steueranwendungen zu den Stromversorgungskomponenten der zumindest einen Anlage die Stromversorgungskomponenten und die vom Steuerungssystem für Stromversorgungskomponenten identifizierten Steueranwendungen auf zumindest einer Ein-/Ausgabeeinheit ausgegeben werden (103, 203, 303; 104, 204, 304), wobei die zumindest eine Ein-/Ausgabeeinheit an das Steuerungssystem für Stromversorgungskomponenten angebunden ist.

3. Verfahren nach einem der Ansprüche 1 bis 2, **dadurch gekennzeichnet, dass** nach der Zuordnung zwischen Stromversorgungskomponenten und identifizierten Steueranwendungen Konfigurationsparameter und/oder vorgebbare Aktionen für die jeweilige Steueranwendung eingegeben werden (104, 204, 304) .

4. Verfahren nach einem der vorangegangenen Ansprüche, **dadurch gekennzeichnet, dass** für die Zuordnung zwischen Stromversorgungskomponenten und identifizierten Steueranwendungen und/oder für eine Eingabe von Konfigurationsparametern und/oder vorgebbaren Aktionen der Steueranwendungen eine Authentifizierung vorgesehen wird (104, 204, 304) .

5. Verfahren nach Anspruch 4, **dadurch gekennzeichnet, dass** ein Umfang der identifizierten Stromversorgungskomponenten und/oder der Steueranwendungen und/oder zulässige Konfigurationsmöglichkeiten durch unterschiedliche Nutzerrollen definiert wird (104, 204, 304).

6. Verfahren nach einem der vorangegangenen Ansprüche, **dadurch gekennzeichnet, dass** als Steuerungssystem für Stromversorgungskomponenten ein Steuerungssystem umfassend eine zentrale Servereinheit mit zugeordneter Datenbank, lokalen Servereinheiten, welche den Stromversorgungskomponenten fix zugeordnet sind, und Clienteinheiten zu jeder lokalen Servereinheit verwendet wird.

7. Verfahren nach Anspruch 6, **dadurch gekennzeichnet, dass** für jede identifizierte Steueranwendung im Steuerungssystem für Stromversorgungskomponenten eine Clienteinheit für eine Kommunikation zwischen der identifizierten Steueranwendung und der zentralen Servereinheit des Steuerungssystems erstellt wird.

8. Verfahren nach einem der Ansprüche 1 bis 7, **dadurch gekennzeichnet, dass** die Zuordnungen zwischen den Stromversorgungskomponenten und den identifizierten Steueranwendungen zentral im Steuerungssystem für Stromversorgungskomponenten gespeichert werden (205), und dass eine Überwachung der Stromversorgungskomponenten auf Event-Alarme zentral durch das Steuerungssystem für Stromversorgungskomponenten durchgeführt wird (206).

9. Verfahren nach einem der Ansprüche 1 bis 8, **dadurch gekennzeichnet, dass** eine Änderung der Konfigurationsparameter und/oder vorgebbare Aktionen der jeweiligen Steueranwendung zentral über das Steuerungssystem für Stromversorgungskomponenten durchgeführt werden.

10. Verfahren nach einem der Ansprüche 1 bis 9, **dadurch gekennzeichnet, dass** zentral auf dem Steuerungssystem für Stromversorgungskomponenten Daten zu Event-Alarmen für Diagnosezwecke gesammelt werden.

11. Verfahren nach einem der Ansprüche 1 bis 7, **dadurch gekennzeichnet, dass** die Zuordnungen zwischen den Stromversorgungskomponenten und den identifizierten Steueranwendungen lokal in der jeweiligen Steueranwendung und/oder der jeweils zugeordneten Stromversorgungskomponente gespeichert werden (305), und dass nach erfolgter Zuordnung die Verbindung zum Steuerungssystem für Stromversorgungskomponenten über das Kommunikationsnetz getrennt wird.

12. Verfahren nach Anspruch 11, **dadurch gekennzeichnet, dass** von den jeweiligen Steueranwendungen lokal die jeweils zugeordnete Stromversorgungskomponente auf Event-Alarme überwacht wird (306).

13. Verfahren nach einem der Ansprüche 11 bis 12, **dadurch gekennzeichnet, dass** eine Änderung der Konfigurationsparameter und/oder vorgebbare Aktionen der jeweiligen Steueranwendung lokal, insbesondere über eine Ein-/Ausgabeeinheit der jeweiligen Steuer- und/oder Computereinheit, durchgeführt wird.

14. Verfahren nach einem der Ansprüche 11 bis 14, **dadurch gekennzeichnet, dass** Daten zu Event-Alarmen von Stromversorgungskomponenten lokal durch die jeweils zugeordnete Steueranwendung für Diagnosezwecke gesammelt werden.

15. Verfahren nach einem der vorangegangenen Ansprüche,
**dadurch gekennzeichnet, dass** für eine Kommunikationsverbindung zwischen dem Steuerungssystem für Stromversorgungskomponenten und der Steueranwendung eine so genannte OPC-UA-Schnittstelle für einen Datenaustausch eingesetzt wird.

16. Verfahren nach einem der vorangegangenen Ansprüche,
**dadurch gekennzeichnet, dass** für ein Versenden des Detektionsaufrufs das so genannte Discovery and Configuration Protocol (DCP) verwendet wird (103, 203, 303).

## Claims

1. Method for monitoring, managing and controlled shutdown of control and/or computer units of at least one system, wherein the control and/or computer units are supplied with power by means of power supply components, **characterised in that** a control application is installed (101, 201, 301) on each of the control and/or computer units of the at least one system, **in that** a connection to a control system for power supply components is established (102, 202, 302) via a communication network by the power supply components and the control and/or computer units of the at least one system, **in that** in addition to the power supply components of the at least one system, the control applications installed on the control and/or computer units of the at least one system are identified (103, 203, 303) by means of a detection call sent by the control system via the communication network, **in that** the power supply components of the at least one system are assigned (104, 204, 304) the identified control applications which are installed on the control and/or computer units that are at least impacted by a fault in the respective power supply component, **in that** the assignments between the power supply components and identified control applications are saved (105), **in that** the power supply components are monitored for event alarms (106), and **in that** on an event alarm occurring in a power supply component, at least one definable action is initiated (107, 207, 307) by the at least one assigned control application on the associated control and/or computer unit.

2. Method according to claim 1, **characterised in that** for an assignment of the identified control applications to the power supply components of the at least one system the power supply components and the control applications identified by the control system for power supply components are output (103, 203, 303; 104, 204, 304) on at least one input/output unit, wherein the at least one input/output unit is connected to the control system for power supply components.

3. Method according to one of claims 1 to 2, **characterised in that** after the assignment between power supply components and identified control applications, configuration parameters and/or definable actions are entered (104, 204, 304) for the particular control application.

4. Method according to one of the preceding claims,
**characterised in that** authentication is provided (104, 204, 304) for the assignment between power supply components and identified control applications and/or for entering configuration parameters and/or definable actions of the control applications.

5. Method according to claim 4, **characterised in that** a scope of the identified power supply components and/or of the control applications and/or permitted configuration options is defined (104, 204, 304) by different user roles.

6. Method according to one of the preceding claims,
**characterised in that** a control system comprising a central server unit having an associated database, local server units permanently assigned to the power supply components, and client units for each local server unit is used as the control system for power supply components.

7. Method according to claim 6, **characterised in that** for each identified control application, a client unit for communication between the identified control application and the central server unit of the control system is created in the control system for power supply components.

8. Method according to one of claims 1 to 7, **characterised in that** the assignments between the power supply components and the identified control applications are saved (205) centrally in the control system for power supply components, and **in that** monitoring of the power supply components for event alarms is performed (206) centrally by the control system for power supply components.

9. Method according to one of claims 1 to 8, **characterised in that** a change to the configuration parameters and/or definable actions of the respective control application are carried out centrally via the control system for power supply components.

10. Method according to one of claims 1 to 9, **characterised in that** data on event alarms is collected centrally on the control system for power supply components for diagnostic purposes.

11. Method according to one of claims 1 to 7, **characterised in that** the assignments between the power supply components and the identified control applications are stored (305) locally in the respective control application and/or in the respectively assigned power supply component, and **in that** once the assignment has been made, the connection to the control system for power supply components via the communication network is disconnected.

12. Method according to claim 11, **characterised in that** the respectively assigned power supply component is locally monitored (306) for event alarms by the respective control application.

13. Method according to one of claims 11 to 12, **characterised in that** a change to the configuration parameters and/or definable actions of the respective control application is carried out locally, in particular via an input/output unit of the associated control and/or computer unit.

14. Method according to one of claims 11 to 13, **characterised in that** data on event alarms from power supply components is collected locally by the respectively assigned control application for diagnostic purposes.

15. Method according to one of the preceding claims,
**characterised in that** for a communication connection between the control system for power supply components and the control application, an "OPC-UA interface" is used for data transfer.

16. Method according to one of the preceding claims,
**characterised in that** the Discovery and Configuration Protocol (DCP) is used (103, 203, 303) for transmitting the detection call.

## Revendications

1. Procédé de surveillance, de commande et d'arrêt contrôlé d'unités de commande et/ou informatiques d'au moins une installation, les unités de commande et/ou informatiques étant alimentées en énergie au moyen de composants d'alimentation électrique, **caractérisé en ce que** respectivement une application de commande est installée (101, 201, 301) sur les unités de commande et/ou informatiques de l'au moins une installation, **en ce qu'**une liaison vers un système de commande pour composants d'alimentation électrique est établie (102, 202, 302) via un réseau de communication par les composants d'alimentation électrique et les unités de commande et/ou informatiques de l'au moins une installation, **en ce que**, outre les composants d'alimentation électrique de l'au moins une installation, les applications de commande installées sur les unités de commande et/ou informatiques de l'au moins une installation sont également identifiées (103, 203, 303) au moyen d'un appel de détection émis par le système de commande via le réseau de communication, **en ce que** sont associées (104, 204, 304) aux composants d'alimentation électrique de l'au moins une installation les applications de commande identifiées qui sont installées sur les unités de commande et/ou informatiques qui sont au moins influencées par une défaillance du composant d'alimentation électrique respectif, **en ce que** les associations entre les composants d'alimentation électrique et les applications de commande identifiées sont sauvegardées (105), **en ce que** les composants d'alimentation électrique sont surveillés (106) quant à des alertes d'événements et **en ce que**, en cas de survenance d'une alerte d'événement sur un composant d'alimentation électrique, au moins une action spécifiable est initiée (107, 207, 307) par l'au moins une application de commande associée sur l'unité de commande et/ou informatique associée.

2. Procédé selon la revendication 1, **caractérisé en ce que**, pour une association des applications de commande identifiées aux composants d'alimentation électrique de l'au moins une installation, les composants d'alimentation électrique et les applications de commande identifiées par le système de commande pour composants d'alimentation électrique sont émis (103, 203, 303 ; 104, 204, 304) sur au moins une unité d'entrée/sortie, l'au moins une unité d'entrée/sortie étant reliée au système de commande pour composants d'alimentation électrique.

3. Procédé selon l'une des revendications 1 à 2, **caractérisé en ce que** sont entrés (104, 204, 304), après l'association entre composants d'alimentation électrique et applications de commande identifiées, des paramètres de configuration et/ou des actions spécifiables pour l'application de commande respective.

4. Procédé selon l'une des revendications précédentes, **caractérisé en ce qu'**une authentification est prévue (104, 204, 304) pour l'association entre composants d'alimentation électrique et applications de commande identifiées et/ou pour une entrée de paramètres de configuration et/ou d'actions spécifiables des applications de commande.

5. Procédé selon la revendication 4, **caractérisé en ce qu'**un volume des composants d'alimentation électrique identifiés et/ou des applications de commande et/ou des possibilités de configuration autorisées est défini (104, 204, 304) par différents rôles d'utilisateur.

6. Procédé selon l'une des revendications précédentes, **caractérisé en ce qu'**est utilisé, en tant que système de commande pour composants d'alimentation électrique, un système de commande comprenant une unité serveur centrale avec base de données associée, des unités serveurs locales qui sont associées fixement aux composants d'alimentation électrique et des unités clients pour chaque unité serveur locale.

7. Procédé selon la revendication 6, **caractérisé en ce qu'**est créée, pour chaque application de commande identifiée, dans le système de commande pour composants d'alimentation électrique, une unité client pour une communication entre l'application de commande identifiée et l'unité serveur centrale du système de commande.

8. Procédé selon l'une des revendications 1 à 7, **caractérisé en ce que** les associations entre les composants d'alimentation électrique et les applications de commande identifiées sont sauvegardées (205) centralement dans le système de commande pour composants d'alimentation électrique et **en ce qu'**une surveillance des composants d'alimentation électrique quant à des alertes d'événements est effectuée (206) centralement par le système de commande pour composants d'alimentation électrique.

9. Procédé selon l'une des revendications 1 à 8, **caractérisé en ce qu'**une modification des paramètres de configuration et/ou actions spécifiables de l'application de commande respective est effectuée centralement via le système de commande pour composants d'alimentation électrique.

10. Procédé selon l'une des revendications 1 à 9, **caractérisé en ce que** des données relatives à des alertes d'événements sont collectées centralement sur le système de commande pour composants d'alimentation électrique à des fins de diagnostic.

11. Procédé selon l'une des revendications 1 à 7, **caractérisé en ce que** les associations entre les composants d'alimentation électrique et les applications de commande identifiées sont sauvegardées (305) localement dans l'application de commande respective et/ou le composant d'alimentation électrique respectivement associé et **en ce que**, après que l'association a eu lieu, la liaison avec le système de commande pour composants d'alimentation électrique est coupée via le réseau de communication.

12. Procédé selon la revendication 11, **caractérisé en ce que** le composant d'alimentation électrique respectivement associé est surveillé (306) localement par les applications de commande respectives quant à des alertes d'événements.

13. Procédé selon l'une des revendications 11 à 12, **caractérisé en ce qu'**une modification des paramètres de configuration et/ou actions spécifiables de l'application de commande respective est effectuée localement, et plus particulièrement sur une unité d'entrée/sortie de l'unité de commande et/ou informatique respective.

14. Procédé selon l'une des revendications 11 à 13, **caractérisé en ce que** des données relatives à des alertes d'événements de composants d'alimentation électrique sont collectées localement par l'application de commande respectivement associée à des fins de diagnostic.

15. Procédé selon l'une des revendications précédentes, **caractérisé en ce qu'**est utilisée, pour une liaison de communication entre le système de commande pour composants d'alimentation électrique et l'application de commande, une interface dite OPC UA pour un échange de données.

16. Procédé selon l'une des revendications précédentes, **caractérisé en ce qu'**est utilisé (103, 203, 303), pour envoyer l'appel de détection, le protocole dit Discovery and Configuration Protocol (DCP).
